Europäisches Patentamt

European Patent Office

Office européen des brevets

(19)

(11) Publication number: **0 061 861**
**B1**

(12) **EUROPEAN PATENT SPECIFICATION**

(45) Date of publication of patent specification: **26.02.86**

(21) Application number: **82301316.4**

(22) Date of filing: **15.03.82**

(51) Int. Cl.⁴: **H 01 M 4/74,** H 01 M 10/39,
D 04 H 1/70

(54) Cathode electrode structures for sodium sulphur cells and their manufacture.

(30) Priority: **18.03.81 GB 8108544**
**18.03.81 GB 8108525**

(43) Date of publication of application:
**06.10.82 Bulletin 82/40**

(45) Publication of the grant of the patent:
**26.02.86 Bulletin 86/09**

(84) Designated Contracting States:
**DE FR**

(56) References cited:
EP-A-0 014 282
EP-A-0 020 061
FR-A-2 313 489
US-A-3 012 923
US-A-3 493 452
US-A-3 993 503

(73) Proprietor: CHLORIDE SILENT POWER LIMITED
52 Grosvenor Gardens
London, SW1W 0AU (GB)

(72) Inventor: Ozsanlav, Vedat
96 Morgan Place South Reddish
Stockport SK5 7NY, Cheshire (GB)
Inventor: Riley, David Joseph
9 Porters Croft Oaklands
Guilden Sutton Chester (GB)
Inventor: McNamee, Michael
37 Fort Street
Wallasey Merseyside (GB)
Inventor: Ansell, Raymond Owen
29 Thirlmere Close
Frodsham Cheshire (GB)

(74) Representative: Cross, Rupert Edward Blount
et al
BOULT, WADE & TENNANT 27 Furnival Street
London EC4A 1PQ (GB)

Courier Press, Leamington Spa, England.

## Description

This invention relates to cathode electrode structures for sodium sulphur cells.

In a sodium sulphur cell, a solid electrolyte material, typically beta alumina, separates molten sodium forming the anode from a sulphur/sodium polysulphide cathodic reactant. On discharge of the cell, the sodium gives up electrons at the anodic interface of the solid electrolyte and sodium ions pass through the electrolyte into the cathode adjacent the opposite face of the electrolyte. The electrons pass through the sodium to the anode current collector and thence around an external circuit to a cathode current collector in the cathodic region of the cell. The electrons must pass from this cathode current collector to the region of the cathode adjacent the surface of the solid electrolyte; here they react with the sulphur to form sulphide ions. Sulphide ions and sodium ions form a polysulphide. The electronic conductivity of molten sulphur is low and hence it is the practice to pack the cathodic region with a fibrous carbon or graphite material to provide the required electronic conductivity, the fibrous material forming a matrix through which the cathodic reactant can move.

Sodium sulphur cells are commonly of tubular form and they may be of the kind known as a central sodium cell in which the sodium is inside the electrolyte tube and the cathodic region lies between the outer surface of the electrolyte tube and a tubular current collector, which might constitute or form part of the cell housing. Alternatively the cell may be of the type known as a central sulphur cell in which the sodium is outside the electrolyte tube and the cathodic reactant is in the annular region between the inner surface of the electrolyte tube and the central current collector rod or tube. In each of these constructions, the cathodic region is of annular form. It has been a common practice to use graphite felt as the electronically-conductive packing material in the cathodic region. Such felt may be formed for example into annular elements which may be packed axially into the cathodic region, the felt subsequently being impregnated with sulphur. It is also known for example from U.K. Patent Specifications Nos. 1472975 and 1513682, to fabricate a cathode matrix from preformed elements which have been shaped by compression whilst impregnated with liquid sulphur, the elements being cooled whilst being pressed so that they can be fitted into the annular region of the cell. When the cell is raised to the operating temperature, the sulphur melts and the compressed fibrous material expands to provide good contact with both the current collector and the electrolyte surface.

In U.S. Patent Specification No. 4,076,902, there is described a sodium sulphur cell in which graphite fibres are arranged in an annular region between a beta alumina electrolyte tube and a surrounding cell housing with the fibres extending in a direction normal to the cathodic current collector constituted by the cell housing and thus normal to the electrolyte tube. It has long been appreciated that radial orientation of the fibres would be desirable to improve the radial conductivity but the above-mentioned U.S. patent specification does not disclose any method by which the graphite fibres can be so oriented. One method of radially orienting fibres is disclosed in U.K. Patent Application No. 7904968 (2042244). In this specification there is described a method in which a compressible block of electronically-conductive fibrous materials is formed with the fibres extending predominantly in parallel planes; the block is then cut in a plurality of parallel planes normal to said one plane to form at least one sheet in which all the fibres have a component of direction normal to the plane of the sheet, the sheet is then compressed along a series of parallel regions which extend across the sheet in its plane to form segments of trapezoidal section between the compressed regions with the fibres having a component of direction normal to the parallel surface of the trapezoids. The fibrous sheet is impregnated either before compression or whilst compressed, with the cathodic reactant at a temperature such that the cathodic reactant is liquid and the compressed impregnated sheet is cooled to solidify the reactant. The segments of trapezoidal form thus form a plurality of segments which may be assembled together, each extending at least part of the length of the cell, to form an annular cathode electrode structure.

In U.S. 3012923, there is disclosed a method of applying mineral fibres, e.g. glass fibres, as insulation around a pipe with the fibres extending radially from the pipe. This method requires bonding the fibres with a binder or adhesive which is cured.

It is one of the objects of the present invention to provide a simpler and more convenient method of forming a cathode structure for a cylindrical sodium sulphur cell with fibres extending in a radial direction between the electrolyte surface and the current collector.

The present invention makes use of a sheet of fibrous electronically-conductive material having fibres lying in planes parallel to the plane of the sheet and substantially all the fibres having at least a component of direction extending in a predetermined direction. In practice such sheets of material are available either with the fibres extending in random directions parallel to the plane of the sheet or with substantially all the fibres extending in said predetermined direction. Either type of sheet may be used but, as will be apparent from the following description, if the fibres substantially all extend in the same direction, then it becomes possible to make substantially all the fibres lie in the cell in directions extending from the electrolyte to the current collector. If the fibres extend in random directions in the sheet then it is possible, using the present invention, to have the majority of the fibres in the cathode structure in the cell with a component of direction extending from the electrolyte to the current collector.

According to the present invention, there is provided a method of forming a cathode structure for a cylindrical sodium sulphur cell, which cathode structure is of fibrous electronically-conductive material impregnated with sulphur/sodium polysulphides, the structure having fibres substantially all of which have at least a component of direction extending radially, the structure being formed from a sheet of fibrous electronically-conductive material, which sheet has fibres laying in planes parallel to the plane of the major surfaces of the sheet and substantially all having at least a component of direction extending in a given direction parallel to the plane of the sheet, which method is characterised by the steps of firstly needling the sheet, then cutting said sheet into strips, each strip being a longitudinal strip extending normally to said given direction, separating the strips, assembling the strips into a sheet-like structure with each strip turned through substantially 90° about its longitudinal axis and with those surfaces of the strips, which are constituted by the surfaces where adjacent strips have been separated from one another, forming parts of the major faces of said sheet-like structure, compressing the sheet structure so formed in a direction normal to the planes of the major faces of the structure in a series of parallel regions to form a series of parallel grooves with sloping sides defining segments of trapezoidal section between compressed regions with fibres lying normal to the parallel surfaces of the trapezoids between the compressed regions and impregnating the assembly with liquid sulphur or sodium polysulphides. The sheet is a mat-like structure having a finite thickness. It will be appreciated that if each strip is turned through 90°, then the original sheet is reformed into a plurality of strips in which the fibres, which extend or have components in said given direction in the original sheet, now have these fibres rotated to lie substantially to have directions or components of directions normal to the original plane of the sheet.

The strips are separate from one another whilst being turned and are reassembled into a flat or arcuate sheet-like structure with the surfaces of the strips, constituted by the surfaces where adjacent strips have been separated from one another, forming parts of the major sufaces of said structure.

Conveniently the separate strips are assembled in the appropriate orientation in a tray, and may be joined together by threads, e.g. of twisted carbon fibres, which threads ultimately form hinges for shaped trapezoidal strips produced by moulding the assembly.

It is the usual practice, in sodium sulphur cells, to use a cylindrical construction requiring an annular cathode structure. The afore-mentioned structure is therefore made into a curved sheet-like structure forming a cylinder or part cylinder for insertion into an annular cathodic region of a cell and, for this reason, it is formed into the trapezoidal segments, which may be hinged to one another, and which can then be formed into the required annular or part-annular structure.

The sheet material typically comprises carbon or graphite fibre material and would generally be predominantly of such material although, as is known in this art, mixed fibre materials may be used.

If the strips are rotated exactly through 90°, they may be re-formed into a flat sheet-like structure with the fibres having a component of direction normal to the plane of this re-formed structure. As previously explained however, for a cylindrical cell, it is required to form an arcuate, e.g. cylindrical or part-cylindrical, structure with the fibres having a radial component of direction. This is readily achieved by reason of the compression of the assembled structure into trapezoidal segments.

Preferably the material is compressed before impregnation with liquid sulphur and maintained compressed until the sulphur has solidified. When the cathode structure is put in a cell and raised to the operating temperature, the sulphur melts and the compressed material will expand slightly. Considering a cylindrical cell, expansion in the circumferential direction is desirable so that the adjacent strips come into close contact. Expansion in the radial direction is desirable to ensure good contact between the fibrous material and the surfaces of the electrolyte and cathode current collector.

In assembling a sodium sulphur cell, such a cathode structure may be put into the annular region between a cathode current collector and an electrolyte tube. The cell may be of the central sodium type, in which case the elements would be around the outside of the electrolyte tube between that tube and a surrounding current collector, which is typically the housing of the cell. This type of cathode structure is also suitable for a central sulphur type of cell in which the elements are put in an annular region within the electrolyte tube, between the inside surface of that tube and a central current collector, typically a rod or tube coaxially within the electrolyte tube.

In the following description, reference will be made to the accompanying drawings in which:—

Figure 1 is a perspective diagram of one type of sheet of carbon fibre material, indicating how it is to be formed into a cathode structure for a sodium sulphur cell;

Figure 2 is a diagram similar to Figure 1 but showing a sheet of a different form of carbon fibre material; and

Figures 3, 4 and 5 are diagrams illustrating a preferred method of forming a cathode structure.

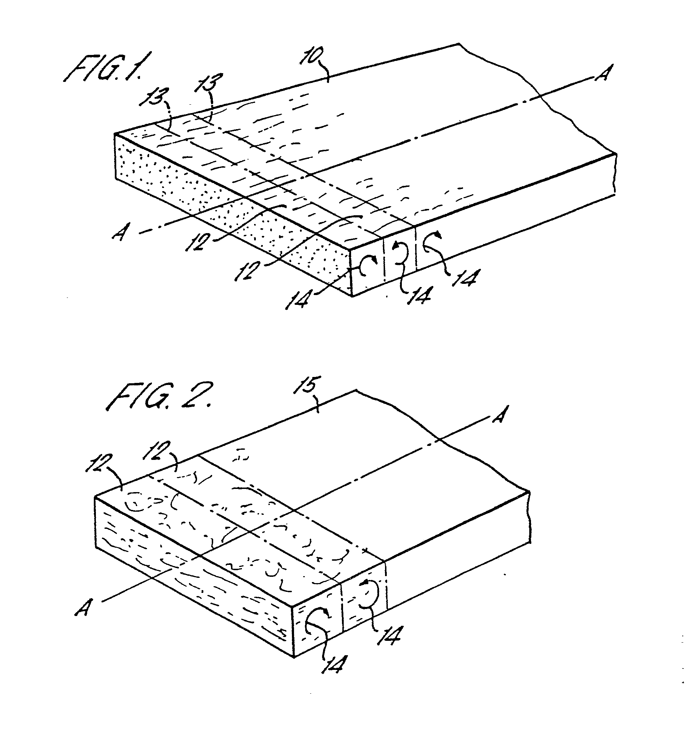

Referring to Figure 1 there is shown a sheet 10 of fibrous material in which the fibres lie in planes parallel to the plane of the sheet and, in this particular embodiment, they are parallel to one another lying generally parallel to line A—A. Fibrous material of this nature, formed of carbon fibre materials, is commercially available in sheet form. Consider this sheet to be divided into a number of strips or segments 12 extending normally to the line A—A by dividing the sheet in planes through the chain lines 13, 13. If each strip 12 is then rotated about its longtudinal axis through 90° as indicated by the arrows 14 with the strips still remaining adjacent to one another to form a planar assembly, then the fibres will now extend in a direction normal to the plane of the assembly. It will be apparent that, if the strips are of square section, having a width equal to their height, then they can be assembled into a sheet of the same dimensions as the original sheet. If these strips are of rectangular shape in section then they can likewise be assembled into a sheet although this sheet will now have a thickness corresponding to the original width of the strips and the length corresponding to the sum of the thicknesses of the various strips. The strips may be turned through 90° in either direction of rotation and, in Figure 1, the arrows 14 are shown alternately in opposite directions.

It will be seen that, by this technique, it is possible to form a sheet in which the fibres lie normal to the plane of the sheet. Sodium-sulphur cells are usually of cylindrical form and the cathode structure is annular. It will be readily apparent that strips such as the strips 12 may be assembled into a cylindrical or part cylindrical structure.

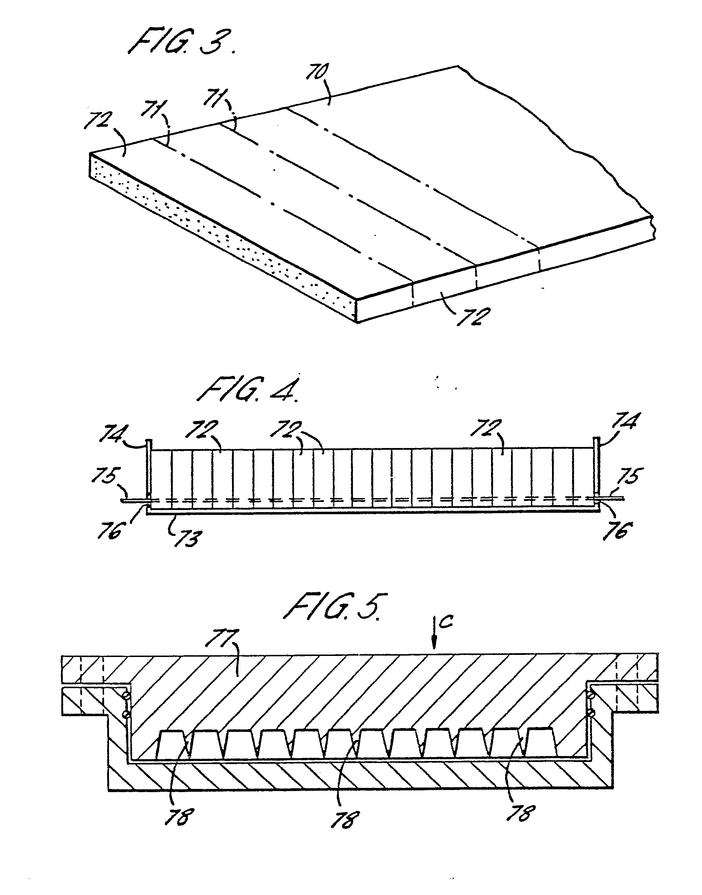

Carbon fibre material is also available in sheets in which the fibres lie parallel to the plane of the sheet but extend in random directions in the plane in which they lie. Such a sheet is shown at 15 in Figure 2. This sheet may be utilised in the same way as the sheet of Figure 1 by dividing it into strips 12 and rotating them through 90°. In this case, since the fibres lie in random directions parallel to the plane of the sheet, they will substantially all have a component of direction parallel to the line A—A in the original sheet and hence, when the strips 12 are turned through 90° about their axes, as indicated by the arrows 14, substantially all the fibres will have a component of direction normal to the plane of the re-formed structure.

The material employed would usually be carbon fibre material, e.g. a pitch-based material, or predominantly of carbon-fibre material. In some cases, a mixed fibre material, e.g. including alumina fibres may be used. The sheet material is needled before cutting.

Figures 3, 4 and 5 illustrate a preferred method of forming a cathode structure for a sodium sulphur cell. A sheet or mat 70 of fibrous material has the fibres lying in planes parallel to the plane of the sheet. The material may be of carbon fibre such as Thornel VMA carbon fibres ("Thornel" is a Registered Trade Mark) or T 101 T carbon fibres made by Kureha Kagaku Kogyo KK. Such fibre material is commercially available in sheet form. The sheet material however may be a mixed fibre material comprising for example a sandwich of alumina fibres (e.g. fibres sold under the Registered Trade Mark "Saffil") between layers of carbon fibres. The sheet 70 is needled and then cut in a series of parallel planes 71 normal to the plane of the sheet 70 to form strips 72, the distance between the successive cuts being chosen in accordance with the required thickness of the cathode structure in the cell. The needling is sufficient to enable the individual cut strips 72 to be handled. These strips 72 are then put in a rectangular tray 73 having upright ends 74 with the fibres lying in planes parallel to the end surfaces 74 of the tray. Thus the strips are, in effect, turned through 90° as previously described and stacked side by side in the former. Using a needle or needles, a plurality of threads 75 are passed through the end walls 74, which have holes 76 for this purpose, and through all the strips. All the threads, which conveniently are of twisted carbon fibre, extend across the full length of the tray through all the strips and so hold the assembly of strips together. The threads however are located near one of the larger faces, conveniently the bottom face, of the tray 73 so that these threads form, in effect, hinges permitting bending of the assembly.

The assembly is then put in a two-part mould 77 (Figure 5) into which liquid sulphur is injected after the mould has been closed. The mould, when closed, gives a slight compression of the assembly across its thickness, that is to say in the direction of the arrow C and also, by reason of the parallel ridges 78, forms the assembly into trapezoidal section strips joined together by the threads 75. When the sulphur has cooled and solidified, the trapezoids retain their shape and the assembly can be bent, using the threads as hinges, to form an annular cathodic element for insertion in a cell. On bringing the cell up to the operating temperature, the sulphur melts permitting slight expansion of the thickness so ensuring good contact with the electrolyte and current collector.

As previously mentioned, the sheet or mat 10 may be a sandwich including alumina fibres. These fibres although electrically non-conductive, will give improved distribution of the cathodic reactant because the alumina is more easily wetted by the polysulphides than is the carbon material.

**Claims**

1. A method of forming an annular or part-annular cathode structure for a cylindrical sodium sulphur cell, which cathode structure is of fibrous electronically-conductive material impregnated with sulphur/sodium polysulphides, the structure having fibres substantially all of which have at least a component of direction extending radially, the structure being formed from a sheet of fibrous electronically-conductive material, which sheet has fibres lying in planes parallel to the plane of the major surfaces of the sheet and substantially all having at least a component of direction extending in a given direction parallel to the plane of the sheet, said method being characterised by the steps of firstly needling the sheet, then cutting said sheet into strips, each strip being a longitudinal strip extending normally to said given direction, separating the strips, assembling the strips into a sheet-like structure with each strip turned through substantially 90° about its longitudinal axis and with those surfaces of the strips, which are constituted by the surfaces where adjacent strips have been separated from one another, forming parts of the major faces of said sheet-like structure, compressing the sheet structure so formed in a direction normal to the planes of the major faces of the structure in a series of parallel regions to form a series of parallel grooves with sloping sides defining segments of trapezoidal section between compressed regions with fibres lying normal to the parallel surfaces of the trapezoids between the compressed regions and impregnating the assembly with liquid sulphur or sodium polysulphides.

2. A method as claimed in claim 1 characterised in that, after assembling the strips together to form said sheet-like structure, at least one thread is passed through all the strips to join them together, the thread being parallel to one of the larger faces of the sheet-like structure.

3. A method as claimed in claim 2 characterised in that the thread is of twisted carbon fibre.

4. A method as claimed in any of the preceding claims wherin the fibre material is impregnated with liquid sulphur and characterised in that the structure is maintained compressed until the sulphur has solidified.

**Revendications**

1. Procédé de façonnage de structure cathodique annulaire ou en anneau tronqué pour pile sodium-soufre cylindrique, laquelle structure cathodique est en matériau fibreux doté de conductibilité électronique imprégné de soufre polysulfures de sodium, la structure présentant des fibres qui comportent en quasi-totalité une composante au moins de direction s'étendant radialement, la structure étant réalisée à partir d'une feuille de matériau fibreux à conductibilité électronique, laquelle feuille présente des fibres s'étendant dans des plans parallèles au plan des grandes surfaces de la feuille et comportant en quasi-totalité une composante au moins de direction s'étendant dans une direction donnée parallèle au plan de la feuille, ce procédé étant caractérisé par les opérations consistant à aiguilleter d'abord la feuille, puis à découper ladite feuille en bandes, chaque bande étant une bande longitudinale s'étendant normalement à ladite direction donnée, à séparer les bandes, à assembler les bandes en une structure pareille à une feuille, chaque bande étant tournée d'approximativement 90° autour de son axe longitudinal et celles des surfaces des bandes qui sont constituées par les surfaces où des bandes voisines ont été séparées l'une de l'autre faisant partie des grandes faces de ladite structure pareille à une feuille, à comprimer la structure de feuille ainsi formée dans une direction normale aux plans des grandes faces de la structure dans une série de régions parallèles pour former une série de rainures parallèles à côtés en pente définissant des segments à section trapézoïdale entre des régions comprimées à fibres s'étendant normalement aux surfaces parallèles des trapèzes séparant les régions comprimées et à imprégner l'ensemble de soufre ou de polysulfures de sodium liquides.

2. Procédé selon la revendication 1 caractérisé en ce que, après avoir assemblé les bandes ensemble pour former ladite structure pareille à une feuille, on fait passer au moins un fil à travers toutes les bandes pour les réunir les unes aux autres, le fil étant parallèle à l'une des grandes faces de la structure pareille à une feuille.

3. Procédé selon la revendication 2 caractérisé en ce que le fil est en fibre de carbone retorse.

4. Procédé selon l'une quelconque des revendications précédentes où le matériau fibreux est imprégné de soufre liquide et caractérisé en ce que la structure est maintenue comprimée jusqu'à solidification du soufre.

**Patentansprüche**

1. Ein Verfahren zur Herstellung von einer ringförmigen oder teilweise ringförmigen Kathodenstruktur für eine zylindrische Natrium-Schwefelzelle, wobei die Kathodenstruktur aus einem faserigen, elektronisch leitendem Material besteht, welches mit Schwefel/Natriumpolysulfiden imprägniert ist, und wobei die Struktur Fasern hat, die im wesentlichen alle wenigstens eine Richtungskomponente haben die radial verläuft, und die Struktur von einer Platte aus faserigem, elektronisch leitendem Material gebildet wird, wobei die Platte Fasern hat, die in Ebenen liegen, die parallel zur Ebene der Hauptoberflächen der Platte sind und die im wesentlichen alle wenigstens eine Komponente aufweisen, die in einer Richtung verläuft, die parallel zu der Ebene der Platte liegt, dadurch gekennzeichnet, daß zuerst die Platte vernäht, dann in Streifen geschnitten wird, wobei jeder Streifen ein Longitudinalstreifen ist, der senkrecht zu der obengenannten Richtung verläuft, die Streifen abgetrennt und dann wieder zu einer plattenartigen Struktur zusammengesetzt werden, wobei jeder Streifen im wesentlichen so um 90° um seine Längsachse gedreht ist, daß die Fläche der Streifen, die aus den Flächen entstanden sind an denen aneinanderliegende Streifen abgetrennt wurden, Teile der Hauptfläche der plattenartigen Struktur bilden, und daß die so gebildete Plattenstruktur in eine Richtung, die senkrecht zu denen Ebenen der Hauptflächen der Struktur liegt, in eine Serie paralleler Bereiche gepreßt wird, um eine Serie von parallel verlaufenden Rinnen mit geneigten Seiten zu formen, so daß Segmente aus trapezartigen Abschnitten zwischen den gepreßten Bereichen entstehen, wobei die Fasern senkrecht zu den parallelen Oberflächen der Trapezoide zwischen den gepreßten Bereichen liegen und daß die Anordnung mit flüssigem Schwefel oder Natriumpolysulfid imprägniert wird.

2. Ein Verfahren nach Anspruch 1, dadurch gekennzeichnet, daß nach dem Zusammensetzen der Streifen zur plattenartigen Struktur wenigstens ein Faden durch alle Streifen gezogen wird, um sie zusammen zu erhalten und daß der Faden parallel zu einer der größeren Flächen der plattenartigen Struktur verläuft.

3. Ein Verfahren nach Anspruch 2, dadurch gekennzeichnet, daß der Faden aus verdrillten Kohlefasern besteht.

4. Ein Verfahren nach einem der vorhergehenden Ansprüche, in welchem das Fasermaterial mit flüssigem Schwefel imprägniert wird und welches dadurch gekennzeichnet ist, daß die Struktur so lange komprimiert bleibt, bis der Schwefel fest ist.

FIG.1.

FIG. 2.

*FIG. 3.*

*70*

*71* *71*

*72*

*72*

*FIG. 4.*

*74* *72* *72* *72* *74*

*75* *75*

*76* *73* *76*

*FIG. 5.*

*C*

*77*

*78* *78* *78*